# EUROPÄISCHE PATENTSCHRIFT

(11) **EP 2 769 111 B1**
(45) Veröffentlichungstag und Bekanntmachung des Hinweises auf die Patenterteilung: **17.08.2016**
(21) Anmeldenummer: 12758484.5
(22) Anmeldetag: 13.09.2012
(51) Int. Cl.: F16K 31/02, F16D 25/12, F16D 13/72, F16D 25/0638, F16D 25/10

(54) **VORRICHTUNG ZUR STEUERUNG EINES KÜHL- UND/ODER SCHMIERÖLSTROMES**
CONTROL DEVICE FOR A COOLING AND/OR LUBRICATION FLOW
DISPOSITIF DE COMMANDE POUR UN FLUX DE REFROIDISSEMENT ET/OU DE LUBRIFICATION

(30) Priorität: 17.10.2011 DE 102011084584
(43) Veröffentlichungstag der Anmeldung: 27.08.2014
(73) Patentinhaber: ZF Friedrichshafen AG, 88046 Friedrichshafen (DE)
(72) Erfinder: REISCH, Matthias, 88214 Ravensburg (DE); DREIHOLZ, Ralf, 88074 Meckenbeuren (DE)
(86) Internationale Anmeldenummer: PCT/EP2012/067914
(87) Internationale Veröffentlichungsnummer: WO 2013/056905

(56) Entgegenhaltungen:
- EP-A1- 1 304 494
- WO-A1-2008/080159
- WO-A2-2010/059491
- US-B1- 6 408 621

## Beschreibung

Die Erfindung betrifft eine Vorrichtung zur Steuerung eines Kühl- und/ oder Schmierölstromes nach dem Oberbegriff des Patentanspruches 1 sowie die Verwendung der Vorrichtung.

Lamellenschaltelemente werden in Kraftfahrzeuggetrieben, insbesondere Automatgetrieben als Kupplungen und Bremsen zum Schalten von Gängen verwendet. Die Betätigung der Schaltelemente, d. h. das Schließen und Öffnen erfolgt in der Regel hydraulisch, wobei ein eigener Hydraulikkreislauf mit einer Getriebeölpumpe vorgesehen ist. Beim Schließen der Lamellenschaltelemente entsteht beim Aneinanderpressen der Lamellen Wärme infolge Reibung - die Schaltelemente müssen daher gekühlt werden, um eine Überhitzung und eine eventuelle Beschädigung-der Lamellen oder Lamellenbeläge zu vermeiden. Hierzu ist es bekannt, dem Lamellenpaket der Schaltelemente Kühlöl aus einem Schmierölkreislauf durch geeignete Verteilorgane zuzuführen. Ein Problem bei der Ölkühlung der Lamellen besteht darin, dass - insbesondere bei offener Kupplung - das Kühlöl zwischen den Lamellen zu einem erhöhten Schleppmoment führt, welches den Kreislauf der Schmierölpumpe und damit auch den Getriebewirkungsgrad belastet.

Durch die DE 10 2005 007 685 A1 der Anmelderin wurde eine Kühlölzuführung für ein nass laufendes Schaltelement mit einem Lamellenpaket bekannt. Dabei wird das Kühlöl in Abhängigkeit von der Kolbenstellung des Kolbens des Schaltelementes mechanisch, z. B. durch ein am Kolben befestigtes Schiebeblech gesteuert. Das Schaltelement wird somit in geschlossenem Zustand laufend mit Kühlöl beaufschlagt, welches durch Fliehkraftwirkung nach außen gegen das Schaltelement geschleudert wird. In einer weiteren Variante wird dem Lamellenpaket durch Betätigung eines Ventils bedarfsorientiert ein Kühlölstrom zugeführt. Die Kühlölzufuhr an das Schaltelement erfolgt dabei von außen über einen Ölkanal, wobei das Ventil bedarfsorientiert zu- oder abgeschaltet wird.

US 6 408 621 B1 zeigt eine Vorrichtung gemäß den Oberbegrif des Anspruchs 1.

Es ist Aufgabe der Erfindung, den Kühl- und/ oder Schmierölstrom für mindestens eine Kühl- und/ oder Schmierstelle bedarfsorientiert zu steuern, insbesondere bei Verwendung in Getrieben.

Die Aufgabe der Erfindung wird durch die Merkmale der unabhängigen Patentansprüche 1 und 18 gelöst. Vorteilhafte Ausgestaltungen ergeben sich aus den Unteransprüchen.

Erfindungsgemäß ist bei einer Vorrichtung zur Steuerung eines Kühl- und/ oder Schmierölstromes ein elektrisch ansteuerbares Ventil vorgesehen, welches drehfest mit der Kühl- und/ oder Schmierstelle verbunden ist, wobei die elektrische Energie zur Betätigung des Ventils berührungslos zuführbar ist. Damit wird eine bedarfsgerechte Kühlung und/ oder Schmierung erreicht. Die Kühl- und/ oder Schmierstellen können - bei Verwendung in einem Getriebe - Lamellenschaltelemente, insbesondere Kupplungen, aber auch Lager oder Zahnräder sein. Bei Lamellenkupplungen werden Schleppmomente, die sich bei nicht bedarfsgerechter Ölzufuhr ergeben, reduziert. Die berührungslose Energieübertragung erfolgt vorzugsweise auf induktiver Basis. Dadurch werden Steckverbindungen und Reibungsverluste vermieden.

Nach einer bevorzugten Ausführungsform ist das Ventil zumindest bereichsweise in einem Funktionsträger angeordnet, welcher drehfest mit der Welle verbunden ist. Die Kühl- und/ oder Schmierstellen, vorzugsweise Lamellenkupplungen in einem Getriebe sind somit über den Funktionsträger drehfest mit der Welle, vorzugsweise einer Getriebewelle verbunden.

Nach einer weiteren bevorzugten Ausführungsform ist das Ventil, im Folgenden auch Kühlölventil genannt, primärseitig, d. h. auf seiner Zuströmseite über erste Ölkanäle im Funktionsträger und/ oder in der Welle sowie über einen Drehölübertrager mit einer stationären Schmierölquelle verbunden; die Ölzuführung kann also auch direkt vom Drehölübertrager in die Ölkanäle des Funktionsträgers erfolgen. Da bevorzugt mehrere Kühlölventile auf dem Umfang des Funktionsträgers und mehrere Schaltelemente am Funktionsträger angeordnet sind, ist es von Vorteil, dass nur ein Drehölübertrager, d. h. nur eine durch Dichtelemente abgedichtete Übergabestelle zwischen Gehäuse und rotierender Getriebewelle vorgesehen ist. Dadurch werden Reibungs- und Leckageverluste vermieden. Der Funktionsträger, der noch weitere Funktionen aufweist, also ein Multifunktionsträger ist, fungiert in diesem Falle als Ventil- und Ölverteilgehäuse, in welchem das vom Drehölübertrager zugeführte Schmieröl auf mehrere Kühlölventile im Funktionsträger verteilt wird.

Nach einer weiteren bevorzugten Ausführungsform sind dem Kühlölventil sekundärseitig, d. h. auf seiner Abströmseite zweite Ölkanäle zugeordnet, welche im Funktionsträger angeordnet sind und Austrittsöffnungen im Bereich des bzw. der Schaltelemente aufweisen. Aus den Austrittsöffnungen tritt das Öl bei geöffnetem Ventil aus und wird durch geeignete konstruktive Mittel, z. B. Ablenkelemente und durch Fliehkraftwirkung an das oder die Lamellenpakete oder sonstige Kühl- und/ oder Schmierstellen herangeführt oder abgeschleudert. Dadurch wird eine wirksame Kühlung erreicht.

Nach einer weiteren bevorzugten Ausführungsform ist im Bereich der zweiten Ölkanäle ein radial nach innen gerichteter Krümmer angeordnet. Durch diesen Krümmer, der die Wirkung eines Syphon hat, wird verhindert, dass das Ventilgehäuse leerläuft und nicht mehr mit Öl befüllt ist. Das Öl wird also nach dem Austritt aus dem Ventilgehäuse entsprechend dem Syphon-Prinzip zunächst auf einen kleineren Durchmesserentgegen der Fliehkraft - geführt und erst dann zum Lamellenschaltelement geleitet. Hierdurch wird sichergestellt, dass der Raum, in dem sich bewegliche Teile des Ventils befinden, mit Öl gefüllt bleibt und dadurch eine Fliehkraftkompensation ermöglicht wird. Zur Kompensation der Fliehkraft ist es erforderlich, dass die beweglichen Ventilteile einen hinreichenden Auftrieb durch das Schmieröl erfahren.

Nach einer weiteren bevorzugten Ausführungsform ist das Ventil als Schalt- oder Regelventil ausgebildet. Dadurch ist es einerseits möglich, das Ventil bei gleichem Kühlölstrom entweder ein- oder auszuschalten oder den Kühlölstrom hinsichtlich seiner Menge zu regeln. Bei starker Überhitzung kann somit mehr Kühlöl zugeführt werden, bei geringer Erhitzung reicht ein geringerer Kühlölstrom.

Nach einer weiteren bevorzugten Ausführungsform ist das Ventil Teil eines Aktuators, d. h. dem Ventil oder dem Ventilschließglied ist ein Stellmotor oder Antrieb zugeordnet, welcher das Öffnen und Schließen des Ventils bewirkt. Der Aktuator umfasst einen Elektromotor, der seine Drehbewegung auf eine Ventilspindel überträgt, welche über ein Gewinde die Drehbewegung in eine Translationsbewegung des Ventilschließgliedes umsetzt. Damit können Zwischenstellungen und ein relativ hoher Dichtdruck des Ventilschließgliedes erreicht werden.

Nach einer weiteren bevorzugten Ausführungsform ist das Ventil als Magnetventil ausgebildet. Damit entfällt eine Drehbewegung zu Gunsten einer reinen Translationsbewegung eines Ventilstößels. Durch das Magnetventil wird eine höhere Dynamik in der Ventilcharakteristik erreicht.

Nach einer weiteren bevorzugten Ausführungsform ist am Funktionsträger ein elektronisches Steuergerät, im Folgenden auch Elektronikmodul genannt, befestigbar, welches an den Funktionsträger angepasst ist und mit diesem eine Funktionseinheit bildet. Die berührungslose Übertragung von elektrischer Energie und/oder Signalen kann über eine gehäusefest angeordnete Primärspule sowie eine im Elektronikmodul angeordnete, d. h. mitrotierende Sekundärspule erfolgen. Das Elektronikmodul bildet somit mit dem ortsfesten Teil der Energieübertragungseinrichtung eine erste Schnittstelle und mit den elektrisch ansteuerbaren Aktuatoren eine zweite Schnittstelle.

Nach einer weiteren bevorzugten Ausführungsform ist der mindestens eine Aktuator zumindest teilweise im elektronischen Steuergerät aufnehmbar. Dabei kann es sich um Teile des elektrischen Antriebes des Aktuators wie den Stator eines Elektromotors oder die Magnetspule eines Elektromagneten handeln. Diese Teile werden von einem Gehäuse des elektronischen Steuergerätes umschlossen.

Nach einer weiteren bevorzugten Ausführungsform sind mehrere Ventile im Funktionsträger und im Elektronikmodul über den Umfang verteilt angeordnet. Dabei können neben den oben erwähnten Kühlölventilen zur Kühlung von Schaltelementen auch Absperrventile eines Hydraulikkreislaufes zur Schaltung der Schaltelemente angeordnet werden. Der Hydraulikkreislauf, der ein höheres Druckniveau aufweist, kann über eine eigene Drehölzuführung an eine Druckölquelle angeschlossen werden. Mit einem solchen Absperrventil kann der Schließdruck bei geschlossener Kupplung im Schließzylinder ohne Betätigung der Pumpe aufrechterhalten werden. Ein derartiges Absperrventil ist Gegenstand einer zeitgleich von der Anmelderin eingereichten Patentanmeldung mit dem internen Aktenzeichen ZF 003894, die hiermit vollumfänglich in den Offenbarungsgehalt der vorliegenden Anmeldung einbezogen wird.

Nach einer weiteren bevorzugten Ausführungsform sind bewegliche Teile des Aktuators, also beispielsweise die Ankerwelle und die Ventilspindel, welche sich in dem rotierenden Funktionsträger befinden, schwimmend in Kühl- bzw. Schmieröl angeordnet. Damit wird erreicht, dass die beweglichen Teile einen Auftrieb erfahren, welcher die Fliehkraft zumindest teilweise kompensiert. Damit können die beweglichen Teile auch bei größeren Drehzahlen zur Ausübung ihrer Funktion ohne größeren Widerstand bewegt werden.

Nach einer weiteren bevorzugten Ausführungsform kann die mittlere Dichte der beweglichen Teile durch geeignete Maßnahmen an die Dichte des Kühlöls angenähert werden. Beispielsweise kann die Ankerwelle hohl ausgebildet werden, sodass sich ein größeres Volumen und damit eine größere Auftriebskraft ergibt. Andererseits können durch Verwendung von Werkstoffen geringer Dichte, z. B. Kunststoff oder Leichtmetall die Masse der beweglichen Teile und damit die Fliehkraft verringert werden.

Nach einer weiteren bevorzugten Ausführungsform sind mehrere Ventile an einen Drehübertrager anschließbar. Damit werden die Reibungsverluste bei der Ölzuführung reduziert.

Nach einer weiteren bevorzugten Ausführungsform ist ein Temperatursensor zur Erfassung der Temperatur des Kühl- und/ oder Schmierölstromes vorgesehen, beispielsweise im Bereich einer zu kühlenden Lamellenkupplung oder eines Lagers. Bei Abweichung des gemessenen Ist-Wertes kann der Sollwert über die elektronische Steuereinrichtung nachgeführt werden.

Nach einer weiteren bevorzugten Ausführungsform wird der Kühl- und/ oder Schmierölstrom über eine Konstantpumpe gefördert, d. h. dem Drehölübertrager zugeführt. Dabei kann eine Pumpe verwendet werden, welche unabhängig vom Ölbedarf den Öldruck zumindest annähernd konstant hält. Dies kann z. B. - bei Kraftfahrzeuggetrieben - über eine von einem Verbrennungsmotor angetriebene Verstellpumpe erfolgen, bei welcher der Ist-Druck zur Regelung benutzt wird.

Nach einer weiteren bevorzugten Ausführungsform ist die zumindest eine Kühlund/ oder Schmierstelle als Lamellenkupplung ausgebildet. Durch den bedarfgerecht gesteuerten Kühlölstrom werden z. B. Schleppmomente bei geöffneter Kupplung reduziert.

Nach einem weiteren Aspekt der Erfindung wird die oben beschriebene Vorrichtung zur Steuerung eines Kühl- und/ oder Schmierölstromes bei einem Getriebe für ein Kraftfahrzeug, insbesondere einem Automatgetriebe, verwendet. Die oben beschriebene Vorrichtung eignet sich aufgrund ihrer kompakten Bauweise, ihrer Vielseitigkeit (Multifunktionsträger) und ihrer berührungslosen Energieübertragung besonders für den Einsatz in Automatgetrieben für Kraftfahrzeuge, weil sie den Wirkungsgrad des Getriebes verbessert.

Ein Ausführungsbeispiel der Erfindung ist in der Zeichnung dargestellt und wird im Folgenden näher beschrieben, wobei sich aus der Beschreibung und/oder der Zeichnung weitere Merkmale und/ oder Vorteile ergeben können. Es zeigen
- Fig. 1: einen Axialschnitt einer erfindungsgemäßen Vorrichtung mit einem Ventil für eine Kühlölzuführung zu einem Schaltelement eines Getriebes,
- Fig. 2: ein Schaltschema für einen Kühl- und Schmierölstrom und
- Fig. 3: ein Elektronikmodul zur Aufnahme von Aktuatoren.

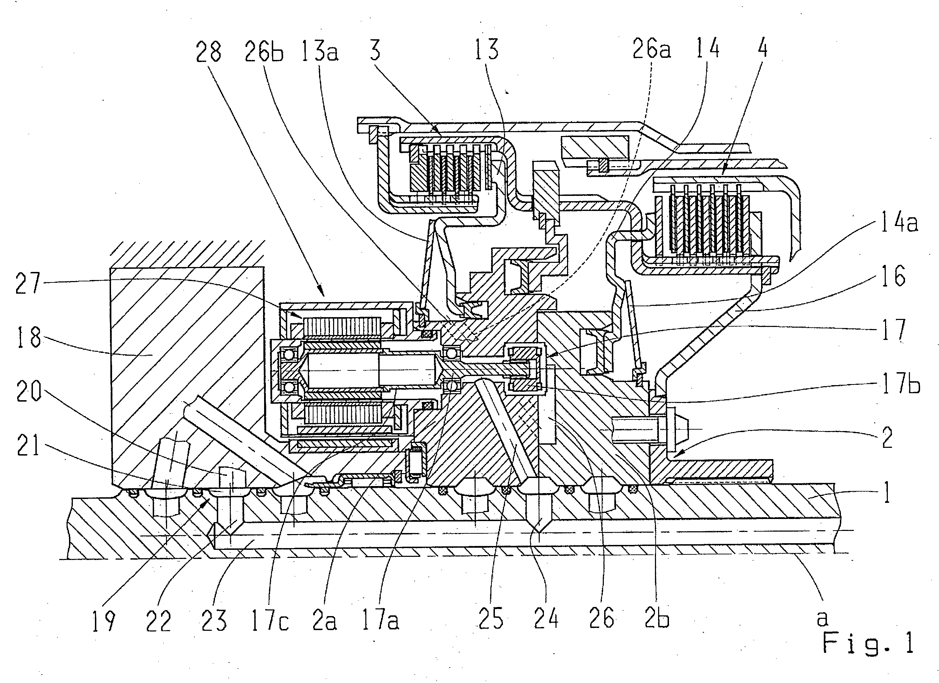

Fig. 1 zeigt eine Vorrichtung zur Steuerung eines Kühlölstromes für ein Automatgetriebe eines Kraftfahrzeuges. Auf einer Getriebewelle 1 ist drehfest ein so genannter Funktionsträger 2 mit einer Rotationsachse a angeordnet. Mit dem Funktionsträger 2 sind eine erste als Lamellenkupplung 3 ausgebildete Kühlstelle und eine zweite als Lamellenkupplung 4 ausgebildete Kühlstelle verbunden. Die erste Lamellenkupplung 3 wird über einen ersten Ringkolben 13, und die zweite Lamellenkupplung 4 wird über einen zweiten Ringkolben 14 betätigt. Für die Rückstellung der Ringkolben 13, 14 sind am Funktionsträger 2 abgestützte Tellerfedern 13a, 14a vorgesehen. Die Antriebsseiten der Schaltelemente 3, 4 sind über ein Verbindungselement 16 und den Funktionsträger 2 mit der Getriebewelle 1 verbunden sind. Der Funktionsträger 2 ist somit auch Träger der Schaltelemente 3, 4.

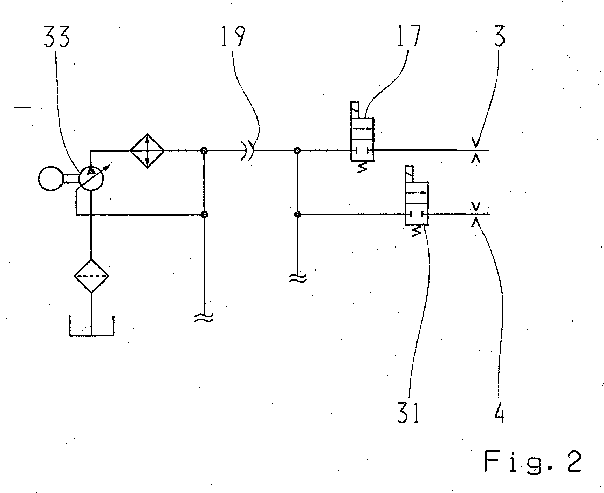

Erfindungsgemäß ist in dem Funktionsträger 2, welcher zwei miteinander verbundene Körper 2a, 2b umfasst, ein Ventil 17, im Folgenden auch Kühlölventil 17 genannt, angeordnet, welches einen Kühlölstrom zu dem Lamellenschaltelement 3 kontrolliert. Zwischen einem (schematisch dargestellten) Getriebegehäuse 18 und der Getriebewelle 1 ist eine so genannte Drehölzuführung 19, auch Drehölübertrager 19 gernannt, vorgesehen, d. h. das Kühlöl wird von einem gehäusefesten Kanal 20 in eine Ringnut 21 in der Getriebewelle 1 übergeben. Von dort gelangt das Kühlöl über eine Radialbohrung 22, eine Axialbohrung 23 und eine weitere Radialbohrung 24 in einen Ölkanal 25 des Funktionsträgers 2 und von dort in das Kühlölventil 17. Auf der Abströmseite des Kühlölventils 17 ist ein als Syphon wirkender Krümmer 26, ausgebildet als radial nach innen gerichtete Tasche 26, im Körper 2a des Funktionsträgers 2 angeordnet. Von der Tasche 26 führt ein gestrichelt dargestellter Ölkanal 26a zu einer Austrittsöffnung 26b am Außenumfang des Körpers 2a des Funktionsträger 2. Das Kühlöl wird also bei geöffnetem Kühlölventil 17 zunächst über die Tasche 26 radial nach innen und anschließend radial nach außen geführt. Damit wird eine Entleerung des Ölraumes des Kühlölventils 17 vermieden. Dies ist - wie unten erläutert wird - aus Gründen der Fliehkraftkompensation durch Auftrieb erforderlich oder vorteilhaft. Aus der Austrittsöffnung 26b gelangt das Kühlöl unter der Einwirkung der Fliehkraft und entlang der geschlitzten Tellerfeder 13a zum Lamellenschaltelement 3, wo eine bedarfsgerechte Kühlung erfolgt. In der Zeichnung ist nur ein Kühlölventil 17 dargestellt. Vorzugsweise ist jedoch noch ein zweites in Umfangsrichtung versetztes Kühlölventil vorgesehen, welches dem zweiten Lamellenschaltelement 4 zugeordnet ist, damit auch das zweite Schaltelement 4 bedarfsorientiert gekühlt werden kann. Dies geht im Übrigen auch aus der Beschreibung zur Fig. 2 hervor.

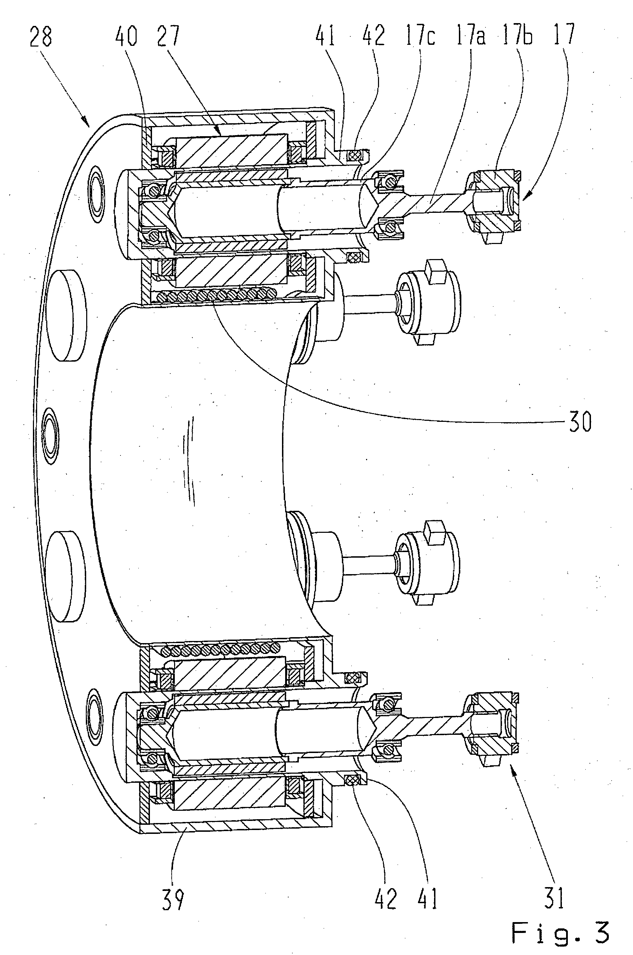

Das Kühlölventil 17 wird elektrisch betätigt, im dargestellten Ausführungsbeispiel durch einen Elektromotor 27, der in einem ringförmig ausgebildeten Elektronikmodul 28 angeordnet ist. Das Elektronikmodul 28, welches als elektronisches Steuergerät fungiert, ist Gegenstand einer separaten zeitgleich eingereichten Patentanmeldung der Anmelderin mit dem internen Aktenzeichen ZF 003896. Der Gegenstand dieser zeitgleichen Anmeldung wird vollumfänglich in den Offenbarungsgehalt der vorliegenden Anmeldung einbezogen. Das Kühlölventil 17 in Verbindung mit dem Elektromotor 27 bildet einen Aktuator, auch Aktor genannt, und weist eine Drehspindel 17a sowie ein mit ihr über ein Bewegungsgewinde verbundenes Ventilschließglied 17b auf. Die Drehspindel 17a ist mit einer Hohlwelle 17c verbunden, auf welcher ein nicht mit einer Bezugszahl versehener Anker des Elektromotors 27 angeordnet ist. Die Drehspindel 17a sowie die Hohlwelle 17c unterliegen bei rotierendem Funktionsträger 2 einer Fliehkraftwirkung, welche zumindest teilweise durch den Auftrieb des Schmieröls sowie die Ausbildung der Ventilkomponenten hinsichtlich Form und Werkstoff kompensiert werden kann. Wichtig für den Auftrieb ist, dass die beweglichen Teile des Ventils 17, d. h. die Hohlwelle 17c, die Ventilspindel 17a und das Ventilschließglied 17b von Öl umgeben, d. h. schwimmend im Kühlöl angeordnet sind. Das Elektronikmodul 28, insbesondere der Elektromotor 27 erhält seine elektrische Energie sowie seine Signale zum Schließen und Öffnen des Kühlölventils 17 auf induktiver Basis: hierzu sind einerseits eine gehäuseseitige Primärspule (ohne Bezugszahl) und andererseits eine im Elektronikmodul 28 angeordnete Sekundärspule 30 (vgl. Fig. 3) angeordnet. Weitere Einzelheiten des Elektronikmoduls 28 werden im Zusammenhang mit der Beschreibung von Fig. 3 erläutert.

Fig. 2 zeigt einen Ausschnitt aus einem Schmierölschaltplan für die beiden Lamellenschaltelemente 3, 4, welche symbolisch dargestellt sind und den Schaltelementen 3, 4 in Fig. 1 entsprechen. Der Schaltplan für das Schmieröl entspricht dem Schaltplan für das Kühlöl, da sowohl für die Schmierung als auch für die Kühlung dasselbe Öl verwendet wird. Das Schmier- bzw. Kühlöl wird durch eine vorzugsweise vom Verbrennungsmotor des Kraftfahrzeuges angetriebene Konstantdruckpumpe 33 gefördert und mit einem annähernd konstanten Druckniveau von ca. 1,5 bar am Drehölübertrager 19 (vgl. Fig. 1) an die Getriebewelle und damit an das Kühlölventil 17 sowie ein weiteres parallel geschaltetes Kühlölventil 31 übergeben. Die Konstantdruckpumpe 33 ist als Verstellpumpe ausgebildet, wobei der Ist-Druck zur Regelung benutzt wird. Möglich wäre auch eine Elektropumpe, welche in Abhängigkeit von diversen Parametern den erforderlichen Öldruck bereitstellt. Die Kühlölmenge eines jeden Schaltelementes 3, 4 wird somit separat und unabhängig voneinander geregelt. Die Kühlölventile 17, 31 können als Schaltventile (einfache Variante) oder als Regelventile ausgeführt sein, wobei das Schaltventil, vorzugsweise als Magnetventil ausgebildet, nur auf und zuschaltet, d. h. dann, wenn ein akuter Kühlbedarf, z. B. durch Überhitzung oder starke Erwärmung auftritt. Im Falle eines Regelventils kann zusätzlich die Kühlölmenge - je nach Kühlbedarf - eingestellt werden. Ein Verfahren zur Kühlung besteht darin, dass die Einschaltung der Kühlung, d. h. das Öffnen der Kühlölventile 17 und/ oder 31 insbesondere dann angestrebt wird, wenn eine Verlustleistung wenig stört oder gering ist. Dies ist beispielsweise dann der Fall, wenn sich das Getriebe im Schubbetrieb befindet (z. B. bei Bergabfahrt oder beim Bremsen), wenn der vom Schleppmoment betroffene Getriebeteil ohnehin abgebremst werden soll (z. B. bei einer Lastschaltung) oder wenn das betroffene Schaltelement geschlossen ist oder mit geringer Differenzdrehzahl rotiert. Ferner kann ein Kühlbedarf dann bestehen, wenn die Kupplung unter starker Erwärmung geöffnet wird und ein Nachkühlbedarf besteht. Um das Schleppmoment durch einen Kühlölstrom gering zu halten, wird die Nachkühlung nach der erforderlichen Zeitspanne wieder abgeschaltet.

Optional kann im Bereich des Kühlölstromes ein (in der Zeichnung nicht dargestellter) Temperatursensor angeordnet sein, welcher die Öl- oder Bauteiltemperatur erfasst und berührungslos an das elektronische Steuergerät 28 meldet. Beispielsweise kann der Temperatursensor direkt an den Schaltelementen 3, 4 angeordnet sein und im Falle einer Überhitzung sofort eine Erhöhung des Kühlöldurchsatzes bewirken.

Fig. 3 zeigt das Elektronikmodul 28, auch elektronisches Steuergerät 28 genannt, als separate Baueinheit in perspektivischer Darstellung, wobei zwei Kühlölventile, das in Fig. 1 dargestellte Kühlölventil 17 sowie ein weiteres identisches Kühlölventil 31 im Schnitt dargestellt sind. Das Elektronikmodul 28 weist ein ringförmig ausgebildetes Gehäuse 39 auf, welches durch einen Deckel 40 nach außen abgeschlossen ist. Innerhalb des Gehäuses ist der Stator des Elektromotors 27 angeordnet (es werden gleiche Bezugszahlen wie in Fig. 1 für gleiche Teile verwendet). Am Gehäuse 39 sind Anschlussstutzen 41 angeformt, über welche das Elektronikmodul 28 mit dem Körper 2a des Funktionsträgers 2 (vgl. Fig. 1) verbunden wird. Gleichzeitig erfolgt eine Abdichtung des Gehäuses 39 gegenüber dem Ölraum im Körper 2a des Funktionsträgers 2 durch O-Ringe 42. In der Zeichnung sind vier Ventile, zwei mit den Bezugszahlen 17, 31 und zwei weitere ohne Bezugszahlen erkennbar. Insgesamt könnten also sechs Ventile auf dem Umfang des Elektronikmoduls 28 angeordnet werden, wobei die Ventile 17, 31 als Kühlölventile fungieren - die restlichen vier Ventile, die identisch ausgebildet sind, können als Absperrventile in einem Hydraulikschaltkreis verwendet werden, wie in der oben erwähnten zeitgleichen Anmeldung der Anmelderin mit dem internen Aktenzeichen ZF 003894 beschrieben. Wie bereits oben ausgeführt, laufen die Drehspindel 17a und die Hohlwelle 17c im Ölraum: sie unterliegen einerseits einer Fliehkraftwirkung und erfahren andererseits einen der Fliehkraft entgegen gerichteten Auftrieb, weicher durch das Gewicht der verdrängten Ölmenge bestimmt wird. Um eine Erhöhung des Auftriebs zu erreichen, ist die Ankerwelle 17c hohl ausgebildet. Zusätzlich werden bevorzugt Werkstoffe mit geringem spezifischen Gewicht verwendet, um die Masse und damit die Fliehkraftwirkung gering zu halten. Wie aus der Zeichnung ersichtlich, ist die Hohlwelle 17c zweifach gelagert. Anstelle des Elektromotors 27 zur Erzeugung einer Drehbewegung kann auch ein Magnet in Verbindung mit einem Ventilstößel, nach Art eines Magnetventils verwendet werden. Die translatorische Bewegung des Ventilstößels wird dann direkt auf das Schließglied übertragen. Wie bereits oben erwähnt, erfolgt die Übertragung von elektrischer Energie auf induktiver Basis: hierfür ist innerhalb des Elektronikmoduls 28 im radial innen liegenden Bereich eine Sekundärwicklung 30 angeordnet, welche mit der hier nicht dargestellten Primärwicklung (vgl. Fig. 1) in Wirkverbindung steht.

Weitere Einzelheiten über Aufbau und Wirkungsweise des Elektronikmoduls 28 sind der zeitgleich eingereichten Anmeldung der Anmelderin mit dem internen Aktenzeichen ZF 003896, wie oben erwähnt, zu entnehmen.

### Bezugszeichen

- 1: Getriebewelle
- 2: Funktionsträger
- 2a: Körper
- 2b: Körper
- 3: erstes Schaltelement
- 4: zweites Schaltelement

- 13: erster Ringkolben
- 13a: Tellerfeder
- 14: zweiter Ringkolben
- 14a: Tellerfeder
- 16: Verbindungselement
- 17: Kühlölventil
- 17a: Drehspindel
- 17b: Schließglied
- 17c: Hohlwelle
- 18: Getriebegehäuse
- 19: Drehölzuführung
- 20: Ölkanal
- 21: Ringnut
- 22: Radialbohrung
- 23: Axialbohrung
- 24: Radialbohrung
- 25: Ölkanal
- 26: Krümmer
- 26a: Ölkanal
- 26b: Austrittsöffnung
- 27: Elektromotor
- 28: Elektronisches Steuergerät
- 30: Sekundärspule
- 31: Kühlölventil
- 33: Konstantdruckpumpe
- 39: Gehäuse (Elektronikmodul)
- 40: Deckel
- 41: Anschlussstutzen
- 42: O-Ring

- a: Rotationsachse

## Patentansprüche

1. Vorrichtung zur Steuerung mindestens eines Kühl- und/ oder Schmierölstromes mittels mindestens eines Ventils (17) für mindestens eine mit einer Welle (1) verbundene Kühl- und/ oder Schmierstelle (3, 4), **dadurch gekennzeichnet, dass** das Ventil (17) elektrisch ansteuerbar, drehfest mit der mindestens einen Kühl- und/ oder Schmierstelle (3, 4) verbunden und dass die elektrische Energie zur Betätigung des Ventils (17) berührungslos zuführbar ist.

2. Vorrichtung nach Anspruch 1, **dadurch gekennzeichnet, dass** das Ventil (17) zumindest bereichsweise in einem drehfest mit der Welle (1) verbundenen Funktionsträger (2) angeordnet ist.

3. Vorrichtung nach Anspruch 2, **dadurch gekennzeichnet, dass** der Kühl- und/ oder Schmierölstrom dem Ventil (17) über erste Ölkanäle (25, 24, 23) im Funktionsträger (2) und/ oder in der Welle (1) sowie über einen Drehölübertrager (19) zuführbar ist.

4. Vorrichtung nach Anspruch 2 oder 3, **dadurch gekennzeichnet, dass** dem Ventil (17) abströmseitig zweite Ölkanäle (26, 26a) zugeordnet sind, welche im Funktionsträger (2) angeordnet sind und Austrittsöffnungen (26b) im Bereich der mindestens einen Kühl- und/ oder Schmierstelle (3) aufweisen.

5. Vorrichtung nach Anspruch 4, **dadurch gekennzeichnet, dass** die zweiten Ölkanäle (26a) zwischen dem Ventil (17) und den Austrittsöffnungen (26b) einen radial nach innen gerichteten Krümmer (26) aufweisen.

6. Vorrichtung nach einem der Ansprüche 1 bis 5, **dadurch gekennzeichnet, dass** das Ventil (17) als Schalt- oder Regelventil ausgebildet ist.

7. Vorrichtung nach einem der Ansprüche 1 bis 6, **dadurch gekennzeichnet, dass** das mindestens eine Ventil (17) Teil eines Aktuators ist und durch einen Elektromotor (27), eine Ankerwelle (17c) sowie eine Ventilspindel (17a) betätigbar ist.

8. Vorrichtung nach einem der Ansprüche 1 bis 6, **dadurch gekennzeichnet, dass** das mindestens eine Ventil (17) Teil eines Aktuators und als Magnetventil ausgebildet ist.

9. Vorrichtung nach einem der Ansprüche 1 bis 8, **dadurch gekennzeichnet, dass** am Funktionsträger (2) ein elektronisches Steuergerät (28) befestigbar ist.

10. Vorrichtung nach Anspruch 9, **dadurch gekennzeichnet, dass** der mindestens eine Aktuator zumindest teilweise im elektronischen Steuergerät (28) aufnehmbar ist.

11. Vorrichtung nach einem der Ansprüche 1 bis 10, **dadurch gekennzeichnet, dass** mehrere Ventile (17) im Funktionsträger (2) und/ oder im elektronischen Steuergerät. (28) über den Umfang verteilt angeordnet sind.

12. Vorrichtung nach einem der Ansprüche 2 bis 11, **dadurch gekennzeichnet, dass** bewegliche Teile (17a, 17b, 17c) des Aktuators in dem drehfest mit der mindestens einen Kühl- und/ oder Schmierstelle (3, 4) verbundenen Funktionsträgers (2) aufgenommen und im Kühlöl schwimmend angeordnet sind.

13. Vorrichtung nach Anspruch 12, **dadurch gekennzeichnet, dass** die mittlere Dichte der beweglichen Teile (17a, 17b, 17c) des Aktuators durch geeignete Werkstoffauswahl und/ oder geometrische Gestaltung der Dichte des Kühlöls angenähert ist.

14. Vorrichtung nach einem der Ansprüche 3 bis 13, **dadurch gekennzeichnet, dass** der über den Drehölübertrager (19) zugeführte Kühl- und/ oder Schmierölstrom mindestens einem weiteren Ventil (31) zuführbar ist.

15. Vorrichtung nach einem der Ansprüche 1 bis 14, **dadurch gekennzeichnet, dass** im Bereich des Kühl- und/ oder Schmierölstromes ein Temperatursensor angeordnet ist.

16. Vorrichtung nach einem der vorhergehenden Ansprüche, **dadurch gekennzeichnet, dass** der Kühl- und/ oder Schmierölstrom von einer Konstantdruckpumpe (33) förderbar ist.

17. Vorrichtung nach einem der Ansprüche 1 bis 16, **dadurch gekennzeichnet, dass** die mindestens eine Kühl- und/ oder Schmierstelle (3, 4) als Lamellenschaltelement (3, 4) ausgebildet ist.

18. Verwendung einer Vorrichtung zur Steuerung eines Kühl- und/ oder Schmierölstromes nach einem der Ansprüche 1 bis 17 in einem Getriebe für Kraftfahrzeuge.

## Claims

1. Device for controlling at least one cooling and/or lubricating oil flow by means of at least one valve (17) for at least one cooling and/or lubricating point (3, 4) connected to a shaft (1), **characterized in that** the valve (17) can be actuated electrically, is connected in a rotationally fixed fashion to the at least one cooling and/or lubricating point (3, 4), and **in that** the electrical energy for actuating the valve (17) can be fed in in a contactless fashion.

2. Device according to Claim 1, **characterized in that** the valve (17) is arranged at least in certain areas in a functional carrier (2) which is connected in a rotationally fixed fashion to the shaft (1).

3. Device according to Claim 2, **characterized in that** the cooling and/or lubricating oil flow can be fed to the valve (17) via first oil ducts (25, 24, 23) in the functional carrier (2) and/or in the shaft (1) as well as via a rotational oil transfer device (19).

4. Device according to Claim 2 or 3, **characterized in that** second oil ducts (26, 26a) are assigned to the valve (17) on the outflow side and are arranged in the functional carrier (2) and have output openings (26b) in the region of the at least one cooling and/or lubricating point (3).

5. Device according to Claim 4, **characterized in that** the second oil ducts (26a) have a radially inwardly directed manifold (26) between the valve (17) and the output openings (26b).

6. Device according to one of Claims 1 to 5, **characterized in that** the valve (17) is embodied as a switching valve or regulating valve.

7. Device according to one of Claims 1 to 6, **characterized in that** the at least one valve (17) is part of an actuator and can be actuated by means of an electric motor (27), an armature shaft (17c) and a valve spindle (17a) .

8. Device according to one of Claims 1 to 6, **characterized in that** the at least one valve (17) is part of an actuator and is embodied as a solenoid valve.

9. Device according to one of Claims 1 to 8, **characterized in that** an electronic control device (28) can be attached to the functional carrier (2).

10. Device according to Claim 9, **characterized in that** the at least one actuator can be accommodated at least partially in the electronic control device (28).

11. Device according to one of Claims 1 to 10, **characterized in that** a plurality of valves (17) are arranged around the circumference in the functional carrier (2) and/or in the electronic control device (28) .

12. Device according to one of Claims 2 to 11, **characterized in that** movable parts (17a, 17b, 17c) of the actuator are accommodated in the functional carrier (2), which is connected in a rotationally fixed fashion to the at least one cooling and/or lubricating point (3, 4), and are arranged in a floating fashion in the cooling oil.

13. Device according to Claim 12, **characterized in that** the average density of the movable parts (17a, 17b, 17c) of the actuator is approximated by suitable selection of material and/or geometric configuration of the density of the cooling oil.

14. Device according to one of Claims 3 to 13, **characterized in that** the cooling and/or lubricating oil flow which is fed via the rotational oil transfer device (19) can be fed to at least one further valve (31) .

15. Device according to one of Claims 1 to 14, **characterized in that** a temperature sensor is arranged in the region of the cooling and/or lubricating oil flow.

16. Device according to one of the preceding claims, **characterized in that** the cooling and/or lubricating oil flow can be fed via a constant pressure pump (33).

17. Device according to one of Claims 1 to 16, **characterized in that** the at least one cooling and/or lubricating point (3, 4) is embodied as a laminated switching element (3, 4).

18. Use of a device for controlling a cooling and/or lubricating oil flow according to one of Claims 1 to 17 in a gearbox for motor vehicles.

## Revendications

1. Procédé de commande d'au moins un flux d'huile réfrigérante et/ou lubrifiante au moyen d'au moins une vanne (17) pour au moins un point de refroidissement et/ou de lubrification (3, 4) relié à un arbre (1), **caractérisé en ce que** la vanne (17) est commandable électriquement, reliée en rotation solidaire à l'au moins un point de refroidissement et/ou de lubrification (3, 4) et **en ce que** l'énergie électrique servant à l'actionnement de la vanne (17) peut être acheminée sans contact.

2. Dispositif selon la revendication 1, **caractérisé en ce que** la vanne (17) est disposée, au moins dans certaines zones, dans un support fonctionnel (2) relié en rotation solidaire à l'arbre (1).

3. Dispositif selon la revendication 2, **caractérisé en ce que** le flux d'huile réfrigérante et/ou lubrifiante peut être acheminé à la vanne (17) par le biais de premiers canaux à huile (25, 24, 23) dans le support fonctionnel (2) et/ou dans l'arbre (1) ainsi que par le biais d'un transmetteur d'huile rotatif (19).

4. Dispositif selon la revendication 2 ou 3, **caractérisé en ce que** deux canaux à huile (26, 26a) sont associés à la vanne (17) du côté aval, lesquels sont disposés dans le support fonctionnel (2) et possèdent des ouvertures de sortie (26b) dans la zone de l'au moins un point de refroidissement et/ou de lubrification (3).

5. Dispositif selon la revendication 4, **caractérisé en ce que** les deuxièmes canaux à huile (26a) possèdent un raccord coudé (26) dirigé vers l'intérieur entre la vanne (17) et les ouvertures de sortie (26b).

6. Dispositif selon l'une des revendications 1 à 5, **caractérisé en ce que** la vanne (17) est réalisée sous la forme d'une vanne tout-ou-rien ou de régulation.

7. Dispositif selon l'une des revendications 1 à 6, **caractérisé en ce que** l'au moins une vanne (17) fait partie d'un actionneur et peut être actionnée par le biais d'un moteur électrique (27), d'un arbre d'induit (17c) ainsi que d'une tige de vanne (17a).

8. Dispositif selon l'une des revendications 1 à 6, **caractérisé en ce que** l'au moins une vanne (17) fait partie d'un actionneur et est réalisée sous la forme d'une électrovanne.

9. Dispositif selon l'une des revendications 1 à 8, **caractérisé en ce qu'**un contrôleur électronique (28) peut être fixé au support fonctionnel (2).

10. Dispositif selon la revendication 9, **caractérisé en ce que** l'au moins un actionneur peut être logé au moins partiellement dans le contrôleur électronique (28).

11. Dispositif selon l'une des revendications 1 à 10, **caractérisé en ce que** plusieurs vannes (17) sont disposées dans le support fonctionnel (2) et/ou dans le contrôleur électronique (28) en étant distribuées sur le pourtour.

12. Dispositif selon l'une des revendications 2 à 11, **caractérisé en ce que** les pièces mobiles (17a, 17b, 17c) de l'actionneur sont logées dans le support fonctionnel (2) relié en rotation solidaire à l'au moins un point de refroidissement et/ou de lubrification (3, 4) et sont disposées flottantes dans l'huile réfrigérante.

13. Dispositif selon la revendication 12, **caractérisé en ce que** la densité moyenne des pièces mobiles (17a, 17b, 17c) de l'actionneur est approchée de la densité de l'huile réfrigérante par une sélection des matériaux et/ou une configuration géométrique appropriées.

14. Dispositif selon l'une des revendications 3 à 13, **caractérisé en ce que** le flux d'huile réfrigérante et/ou lubrifiante acheminé par le biais du transmetteur d'huile rotatif (19) peut être acheminé à au moins une vanne supplémentaire (31).

15. Dispositif selon l'une des revendications 1 à 14, **caractérisé en ce qu'**une sonde de température est disposée dans la zone du flux d'huile réfrigérante et/ou lubrifiante.

16. Dispositif selon l'une des revendications précédentes, **caractérisé en ce que** le flux d'huile réfrigérante et/ou lubrifiante peut être refoulé par une pompe à pression constante (33).

17. Dispositif selon l'une des revendications 1 à 16, **caractérisé en ce que** l'au moins un point de refroidissement et/ou de lubrification (3, 4) est réalisé sous la forme d'un élément de commutation à lamelles (3, 4).

18. Utilisation d'un dispositif de commande d'un flux d'huile réfrigérante et/ou lubrifiante selon l'une des revendications 1 à 17 dans une boîte de vitesses pour véhicules automobiles.
